# EUROPÄISCHE PATENTSCHRIFT

(11) **EP 1 422 272 B1**
(45) Veröffentlichungstag und Bekanntmachung des Hinweises auf die Patenterteilung: **23.08.2006**
(21) Anmeldenummer: 03026202.6
(22) Anmeldetag: 14.11.2003
(51) Int. Cl.: C09D 11/00

(54) **Tintenbasis für pigmentierte Tinten und hieraus hergestellte Tinten sowie deren Verwendung**
Ink base for pigmented inks, inks produced therefrom and their use
Base d'encre pour encres pigmentées, encres produites à partir d'elle et leur emploi

(30) Priorität: 22.11.2002 DE 10254486
(43) Veröffentlichungstag der Anmeldung: 26.05.2004
(73) Patentinhaber: J.S. Staedtler GmbH & Co KG, 90427 Nürnberg (DE)
(72) Erfinder: Müller, Anke, 95473 Creussen (DE); Geis, Manuela, 90461 Nürnberg (DE); Engel, Stefan, Dr., 90607 Nürnberg (DE)

(56) Entgegenhaltungen:
- EP-A- 1 156 086
- EP-A- 1 179 572
- EP-A- 1 321 495
- DE-A- 19 916 532

## Beschreibung

Die Erfindung betrifft eine pigmentierte Tinte, sowie deren Verwendung zum Drucken, insbesondere für Ink-Jet-Systeme oder sonstige maschinelle Schreib-, Druck-, Mal- oder Markier-Verfahren.

Pigmentierte Tinten auf Wasserbasis sowie deren Verwendung für Tintenstrahldrucker, sind prinzipiell bekannt.
Derartige Tinten nach dem Stand der Technik setzen sich aus Wasser, Pigmenten als farbgebende Mittel, Trocknungsverzögerer und ggf. sonstigen Zusätzen wie beispielsweise Polymeren, Emulgatoren, Konservierungsmitteln und Tensiden zusammen. Als Trocknungsverzögerer werden in Tinten nach dem Stand der Technik unter anderen häufig Glykole, Glycerin und Pyrrolidone sowie Mischungen dieser Trocknungsverögerer eingesetzt.
In der nachfolgenden Tabelle sind einige Beispiele für in derartiger Pigmenttinten enthaltenen Trocknungsverzögerer aufgeführt, sowie deren Anteil an der Tinte in Gew. %.

| **Tinte** | **Trocknungsverzögerer** |
|---|---|
| Gelbe Tinte | 3,1% Ethylenglycol |
| | 1,2% Diethylenglycol |
| | 3,9% 2-Pyrrolidon |
| | 10,1% Glycerin |
| | 6,8% Butyltriglycol |
| rote Tinte | 11,2% Ethylenglycol |
| (magenta) | 3,1% 2-Pyrrolidon |
| | 26,7% Glycerin |
| | 6,7% Butyltriglycol |
| blaue Tinte | 7,8% Ethylenglycol |
| (cyan) | 2,0% 2-Pyrrolidon |
| | 12,0% Glycerin |
| | 12,8% Butyltriglycol |
| schwarze Tinte | 0,2% 1,2-Propandiol |
| | 0,3% Diethylenglycol |
| | 2,1% 2-Pyrrolidon |
| | 11,1% Glycerin |
| | 4,3% Triethylenglycol |
| | 13,6% Butyldiglycol |

Nachteilig bei derartigen Tintenzusammensetzungen ist es, dass derartige Pigmenttinten verstärkt zum Eintrocknen an den Druckdüsen neigen, in einem wesentlich höherem Maß als beispielsweise Farbstofftinten. Dies hat zur Folge, dass die Zuverlässigkeit durch verstopfte, eingetrocknete Düsen nicht mehr gewährleistet ist, was sich im Vorfeld auch schon durch ungenügende Druckqualität ankündigt. Es wurde daher versucht durch eine Erhöhung des Anteiles an Trocknungsverzögerer dieses Manko zu kompensieren, was aber wiederum Nachteile in sich birgt. Insbesondere bei schnellen Druckern und der Verwendung billiger Druckmedien kombiniert mit Tinten hohen Gehaltes an Trocknungsverzögerern führt dies zu einer mangelhaften Randschärfe und Flächenbedeckung. Durch die verlängerte Trockenzeit ist die Wahrscheinlichkeit des Verwischens beim Druck und bei der Entnahme aus dem Drucker extrem hoch.
Des weiteren sind die Herstellkosten derartiger Tinten nach dem Stand der Technik sehr hoch.

Aus **DE 199 16 532 A und EP-A-1 156 086** sind Tinten und/oder Tintensätze teils für beschichtete Medien bekannt, wobei die in den Tinten eingesetzten Farbmittel im Lösungsmittel gelöste Farbstoffe sind. Diese Tinten weisen neben Trocknungsverzögerer und ggf. weitere Zusatzstoffe auf. Nachteilig ist es bei derartigen Tinten anzusehen, dass derartige Tinten weniger wasserfest und lichtecht sind und zudem an den Druckrändern, besonders auf konventionellen Druckpapieren, mehr zum Ausbluten neigen als pigmentierte Tinten. Aus EP-A-1179572 sind pigmentierte Tinten bekannt, welche Trocknungsverzögerer enthalten.

**Aufgabe** der vorliegenden Erfindung ist es daher, eine pigmentierte Tinte, insbesondere pigmentierte Tinte für den Ink-Jet-Druck zu schaffen, die die eingangs genannten Nachteile nicht aufweist und insbesondere an den Düsen nicht zum Eintrocknen neigt, aber dennoch auf dem Druckmedium kurze Trockenzeiten aufweist, ein qualitativ gutes Druckbild insbesondere hohe Randschärfe und gleichmäßige Flächen gewährleistet. Unter gleichmäßigen Flächen versteht man, dass die Tinten gut verlaufen sollen, aber an den Farbrändern nicht verlaufen sollen. Bei der Verwendung der erfindungsgemäßen Tinte soll eine hohe Druckerzuverlässigkeit gewährleistet sein. Weiter soll die Tinte kostengünstig produzierbar sein und möglichst universell auf fast allen Druckmedien und verschiedenen Druckern und Drucksystemen einsetzbar sein.

Diese Aufgabe wird mit den Merkmalen des Anspruchs 1 und 7 gelöst.
Bevorzugte Ausführungsformen und vorteilhafte Weiterbildungen sind in den Ansprüchen 2 bis 6 umfasst.

Als besonders vorteilhaft hat sich herausgestellt, dass bei Verwendung der erfindungsgemäßen Tinte das Eintrocknen der Tinten an den Düsen von Druckköpfen zuverlässig verhindert wird, jedoch andererseits die Trockenzeit auch bei schnellen Druckern auf nahezu allen Druckmedien derart kurz ist, dass ein Verwischen im Drucker oder bei Entnahme aus den Drucker sicher vermieden werden kann.
Mit geringen gerätespezifischen Abwandlungen kann die erfindungsgemäße Tinte universell in verschiedenen Druckern eingesetzt werden, wodurch Kosten in der Entwicklung, Produktion, Lagerhaltung und Logistik eingespart werden können.

Gelöst wird die gestellte Aufgabe dadurch, dass eine Tinte geschaffen wurde, welche eine spezielle Kombination von Trocknungsverzögerern (TV) und Aminen (PH), eine sogenannte Tintenbasis, enthält.

Bei den erfindungsgemäß eingesetzten Trocknungsverzögerern (TV) handelt es um eine Kombination von Diethylenglykol (TV1), 1,6-Hexandiol (TV2) und Pentaerythrit (TV3). Diese Trocknungsverzögerer (TV) sind wasserlösliche und ungiftige Substanzen.
Zu diesen eingesetzten Trocknungsverzögerern (TV) können ggf. noch weitere Trocknungsverzögerer (ZS) zugesetzt werden.

Die erfindungsgemäße Tinte weist zudem Amine (PH) zum Einstellen des pH-Wertes auf. Durch die Amine (PH) wird die Tinte basisch, wodurch zudem der Verschleiß am Druckkopf minimiert wird sowie die Haltbarkeit der Tintenzuleitungssystemen verlängert wird.
Zudem hat sich gezeigt, dass Tinte im basischen Bereich wesentlich bessere Lagerstabilität aufweist.
Bespiele für Amine (PH) sind Ethanolamin, Triethanolamin, Ammoniak und Dimethylethanolamin sowie Mischungen dieser genannten Amine (PH).

Durch die beanspruchte Kombination, bestehend aus speziellen Trocknungsverzögerern (TV) mit mindestens einem Amin (PH), wird das Anschreibverhalten nach langem Druckerstillstand signifikant verbessert. Nicht nur nach Druckerstillstand, sondern auch während des Druckvorgangs, wenn einzelne Farben über eine gewisse Druckdauer nicht benötigt oder benutzt wurden, ist eine Verbesserung im Anschreibverhalten deutlich zu erkennen.

Zur näheren Erläuterung ist im nachfolgenden ein **Rahmenbeispiel der Tintenbasis** angeführt:

| | |
|---|---|
| TV1 Diethylenglykol | mindestens 30,0 Gew. % |
| TV2 1,6-Hexandiol | 3,0 - 40,0 Gew. % |
| TV3 Pentaerythrit | 0,01- 3,0 Gew. % |
| PH Amine | 1,5 - 15,0 Gew. % |

Ein **Rezepturbeispiel** für eine in den erfindungsgemäßen Tinten verwendete **Tintenbasis** lautet wie folgt.

| | |
|---|---|
| Diethylenglykol | 74,40 Gew. % |
| 1,6-Hexandiol | 20,70 Gew. % |
| Pentaerythrit | 0,03 Gew. % |
| Amine | 4,97 Gew. % |

Die in der Tintenbasis eingesetzten Amine (PH) können mit der allgemeinen Formel N(R1 R2 R3) beschrieben werden, wobei die freien Reste R1, R2 und R3 unabhängig voneinander eine Wasserstoffgruppe (H), eine Methylgruppe (CH₃) oder eine Ethanolgruppe (CH₂ CH₂ OH) sein können.

Nachfolgend werden ein **Rahmenbeispiel** sowie einige **Tintenrezepturen** angeführt, die unter Verwendung der Tintenbasis hergestellt wurden.

**Rahmenbeispiel: Tinten für den Ink-Jet-Druck**

| | | |
|---|---|---|
| Wasser (bidestilliert) | LM | 20,0 - 95,0 Gew.% |
| Pigmentpräparation | FM | 0,1 - 40,0 Gew.% |
| Triethanolamin | PH | 0,1 - 10,0 Gew.% |
| Pentaerythrit | TV3 | 0,01- 2,0 Gew.% |
| 1,6-Hexandiol | TV2 | 0,5 - 10,0 Gew.% |
| Diethylenglykol | TV1 | 0,2 - 30,0 Gew.% |
| Polymerdispersion | BM | 0 - 20,0 Gew.% |
| Konservierungsmittel | KM | 0,01 - 0,5 Gew.% |
| Tensid | T | 0 - 2,0 Gew.% |
| zusätzl. Trocknungsverzögerer | ZS | 0 - 30,0 Gew.% |

**Rezepturbeispiel 1:**

| | | |
|---|---|---|
| Wasser (bidestilliert) | LM | 62,1 Gew.% |
| Pigmentpräparation | FM | 11,5 Gew.% |
| Triethanolamin | PH | 0,8 Gew.% |
| Pentaerythrit | TV3 | 0,05Gew.% |
| 1,6-Hexandiol | TV2 | 3,35Gew.% |
| Diethylenglykol | TV1 | 12,0 Gew.% |
| Acrylatdispersion | BM | 2,0 Gew.% |
| Butyldiglycol | ZS | 8,0 Gew.% |
| Konservierungsmittel | KM | 0,2 Gew.% |

**Rezepturbeispiel 2:**

| | | |
|---|---|---|
| Wasser (bidestilliert) | LM | 53,1 Gew.% |
| Pigmentpräparation | FM | 25,0 Gew.% |
| Triethanolamin | PH | 0,8 Gew.% |
| Pentaerythrit | TV3 | 0,01Gew.% |
| 1,6-Hexandiol | TV2 | 0,67Gew.% |
| Diethylenglykol | TV1 | 20,2 Gew.% |
| Urethandispersion | BM | 2,0 Gew.% |
| Isothiazolinon-Derivaten | KM | 0,15 Gew.% |

**Rezepturbeispiel 3:**

| | | |
|---|---|---|
| Wasser (entionisiert) | LM | 68,8 Gew.% |
| Pigmentpräparation | FM | 9,0 Gew.% |
| Triethanolamin | PH | 1,0 Gew.% |
| Pentaerythrit | TV3 | 0,01Gew.% |
| 1,6-Hexandiol | TV2 | 0,67Gew.% |
| Diethylenglykol | TV1 | 20,2 Gew.% |
| Konservierungsmittel | KM | 0,2 Gew.% |
| Tensid | T | 0,1 Gew.% |

**Rezepturbeispiel 4: blaue Tinte**

| | | |
|---|---|---|
| Wasser (bidestilliert) | LM | 76,1 Gew.% |
| Pigmentpräparation | FM | 1,8 Gew.% |
| Triethanolamin | PH | 1,0 Gew.% |
| Pentaerythrit | TV3 | 0,02Gew.% |
| 1,6-Hexandiol | TV2 | 0,67Gew.% |
| Diethylenglykol | TV1 | 20,2 Gew.% |
| Konservierungsmittel | KM | 0,15 Gew.% |
| Fettalkoholpolyglykoläther | T | 0,1 Gew.% |

Die Tinten können ggf. weitere Zusätze oder Zusatzstoffe aufweisen. Als Zusatz können Polymere (BM) in gelöster oder dispergierter Form enthalten sein. Beispiele für derartige Polymere (BM) sind beispielsweise Acrylate und Urethane. Weiter übliche und in den beanspruchten Tinten ggf. enthaltene Additive sind beispielsweise Tenside (T), Konservierungsmittel (KM), Emulgatoren und Verlaufshilfsmittel.

Als Farbmittel (FM) werden Pigmente oder Pigmentpräparationen eingesetzt die im Wesentlichen salzfrei sind. Bei der Verwendung der Pigmente sind keine Grenzen gesetzt.

Eine Kostenersparnis bei der Herstellung verbrauchsfähiger Tinten kann dadurch erreicht werden, dass der Anteil an kostenintensiven Chemikalien wie Trocknungsverzögerer (TV) möglichst niedrig gehalten wird, ohne dass dabei die Tintenqualität leidet bzw. die gestellte Aufgabe nicht mehr gelöst werden kann.

Konservierungsmittel (KM) können ggf. bereits auch der Tintenbasis zugegeben sein. Beispiele für Konservierungsmittel (KM) sind Lösungen von Isothiazolinon-Derivaten, O- und N-Acetalen, halogenierten Säureamid-Derivaten und/oder N-, S-heterocyclischen Verbindungen.

Die erfindungsgemäßen Tinten werden zum Drucken, insbesondere zum Drucken mit Ink-Jet-Systemen oder sonstige maschinelle Schreib-, Druck-, Mal- oder Markier-Verfahren verwendet. Die Tinten setzen sich im Wesentlichen aus der Tintenbasis, Farbmitteln (FM) und Wasser (LM) sowie ggf. weiteren Zusatzstoffen zusammen.

## Patentansprüche

1. **Tinte** bestehend aus einer Tintenbasis, Pigmenten als Farbmittel (FM) und Wasser als Lösungsmittel (LM) sowie ggf. weiteren Zusatzstoffen,
**wobei** die Tintenbasis mindestens einen Trocknungsverzögerer und ein pH-Einstellmittel sowie ggf. weitere Zusätze aufweist,
**dadurch gekennzeichnet,**
**dass** sich der Trocknungsverzögerer der Tintenbasis mindestens aus Diethylenglykol (TV1), 1,6-Hexandiol (TV2) und Pentaerythrit (TV3) zusammensetzt,
**dass** sich die Tintenbasis mindestens aus
| | | |
|---|---|---|
| Diethylenglykol | (TV1) | mindestens 30,0 Gew. %, |
| 1,6-Hexandiol | (TV2) | 3,0 - 40,0 Gew. %, |
| Pentaerythrit | (TV3) | 0,01- 3,0 Gew. % und |
| Amin(e) | (PH) | 1,5 - 15,0 Gew. % |
zusammensetzt
**und dass** das pH-Einstellmittel (PH) ein Amin oder eine Mischung mehrerer Amine ist.

2. Tinte nach Anspruch 1,
**dadurch gekennzeichnet,**
**dass** die eingesetzten Amine (PH) nach der allgemeinen Formel N(R1 R2 R3) aufgebaut sind,
**und dass** die freien Reste R1, R2 und R3 unabhängig voneinander eine Wasserstoffgruppe (H), eine Methylgruppe (CH₃) oder eine Ethanolgruppe (CH₂ CH₂ OH) sein können.

3. Tinte nach Anspruch 1 oder 2,
**dadurch gekennzeichnet,**
**dass** die Tintenbasis als weitere Trocknungsverzögerer (ZS) Glykole, Pyrrolidone und /oder Glycerin aufweist.

4. Tinte nach einem der vorhergehenden Ansprüche,
**dadurch gekennzeichnet,**
**dass** das die eingesetzten Pigmente oder Pigmentpräparationen im Wesentlichen salzfrei sind.

5. Tinte nach einem der vorhergehenden Ansprüche,
**dadurch gekennzeichnet,**
**dass** die Tintenbasis als sonstige Zusätze Tenside (T), Konservierungsmittel (KM), Emulgatoren (EM) ggf. weitere Zusätze aufweist.

6. Tinte nach einem der vorstehenden Ansprüche,
**dadurch gekennzeichnet,**
**dass** die Tinte
| | |
|---|---|
| 20,0 - 95,0 Gew.% | Wasser (bidestilliert) (LM), |
| 0,1 - 40,0 Gew.% | Pigmentpräparation (FM), |
| 0,1 - 10,0 Gew.% | Triethanolamin (PH), |
| 0,01- 2,0 Gew.% | Pentaerythrit (TV3), |
| 0,5 - 10,0 Gew.% | 1,6-Hexandiol (TV2), |
| 0,2 - 30,0 Gew.% | Diethylenglykol (TV1), |
| 0 - 20,0 Gew.% | Polymerdispersion (BM), |
| 0,01 - 0,5 Gew.% | Konservierungsmittel (KM), |
| 0 - 2,0 Gew.% | Tensid (T) und |
| 0 - 30,0 Gew.% | zusätzliche Trocknungsverzögerer (ZS) |
aufweist.

7. **Verwendung** einer Tinte nach einem der vorhergehenden Ansprüche zum Drucken, insbesondere für Ink-Jet-Systeme oder sonstige maschinelle Schreib-, Druck-, Mal- oder Markier-Verfahren.

## Claims

1. Ink consisting of an ink base, pigments as colorant (FM) and water as solvent (LM) as well optionally further additives, wherein the ink base comprises at least one drying retarder and a pH setting means as well as optionally further additives, **characterised in that** the drying retarder of the ink base is composed at least of diethylene glycol (TV1), 1,6-hexane diol (TV2) and pentaerythrite (TV3), that the ink base is composed at least of
| | | |
|---|---|---|
| diethylene glycol | (TV1) | at least 30.0 weight %, |
| 1,6-hexane diol | (TV2) | 3.0 - 40.0 weight %, |
| pentaerythrite | (TV3) | 0.01 - 3.0 weight % and |
| amin(s) | (PH) | 1.5 - 15.0 weight %. |
and that the pH setting means (PH) is an amine or a mixture of several amines.

2. Ink according to claim 1, **characterised in that** the amines (PH) used are built up according to the general formula N (R1 R2 R3) and that the free residues R1, R2 and R3 independently of one another can be a hydrogen group (H), a methyl group (CH₃) or an ethanol group (CH₂ CH₂ OH).

3. Ink according to claim 1 or 2, **characterised in that** the ink base has glycols, pyrrolidones and/or glycerol as further drying retarder (ZS).

4. Ink according to one of the preceding claims, **characterised in that** the pigments or pigment preparations used are substantially salt-free.

5. Ink according to one of the preceding claims, **characterised in that** the ink base has surfactants (T), preservatives (KM), emulsifiers (EM) and optionally further additives as other additives.

6. Ink according to one of the preceding claims, **characterised in that** the ink comprises
| | | |
|---|---|---|
| 20.0 - 95.0 | weight % | water (bi-distilled) (LM), |
| 0.1 - 40.0 | weight % | pigment preparation (FM), |
| 0.1 - 10.0 | weight % | triethanolamine (PH), |
| 0.01 - 2.0 | weight % | pentaerythrite (TV3), |
| 0.5 - 10.0 | weight % | 1,6-hexane diol (TV2), |
| 0.2 - 30.0 | weight % | diethylene glycol (TV1), |
| 0 - 20.0 | weight % | polymer dispersion (BM), |
| 0.01 - 0.5 | weight % | preservative (KM) |
| 0 - 2.0 | weight % | surfactant (T) and |
| 0 - 30.0 | weight % | additional drying retarder (ZS). |

7. Use of an ink according to one of the preceding claims for printing, particularly for ink-jet systems or other mechanical writing, printing, painting or marking methods.

## Revendications

1. Encre composée d'une base d'encre, de pigments en tant que colorant (FM) et d'eau en tant que solvant (LM), ainsi qu'éventuellement d'autres additifs,
dans laquelle la base d'encre présente au moins un retardateur de séchage et un agent d'ajustement du pH, ainsi qu'éventuellement d'autres additifs,
**caractérisée en ce que** le retardateur de séchage de la base d'encre se compose au moins de diéthylèneglycol (TV1), de 1,6-hexanediol (TV2) et de pentaérythritol (TV3),
**en ce que** la base d'encre se compose au moins de
| | |
|---|---|
| diéthylèneglycol (TV1) | au moins 30,0 % en masse, |
| 1,6-hexanediol (TV2) | 3,0 à 40,0 % en masse, |
| pentaérythritol (TV3)' | 0,01 à 3,0 % en masse, et |
| amine(s) (pH) | 1,5 à 15,0 % en masse |
et **en ce que** l'agent d'ajustement du pH (PH) est une amine ou un mélange de plusieurs amines.

2. Encre selon la revendication 1,
**caractérisée en ce que** les amines utilisées (PH) sont bâtis ou réalisés selon la formule générale N (R1 R2 R3),
et **en ce que** les groupements libres R1, R2 et R3 peuvent être indépendamment l'un de l'autre un groupement hydrogène (H), un groupement méthyle (CH₃) ou un groupement éthanol (CH₂ CH₂ OH).

3. Encre selon la revendication 1 ou 2,
**caractérisée en ce que** la base d'encre présente comme autres retardateurs de séchage (ZS) des glycols, des pyrrolidones et/ou de la glycérine.

4. Encre selon l'une des revendications précédentes,
**caractérisée en ce que** les pigments utilisés ou les préparations de pigments utilisées sont essentiellement exempts de sel.

5. Encre selon l'une des revendications précédentes,
**caractérisée en ce que** la base d'encre présente en tant qu'autres additifs divers des tensioactifs (T), des conservateurs (KM), des émulsifiants (EM) et éventuellement d'autres additifs.

6. Encre selon l'une des revendications précédentes,
**caractérisée en ce que** l'encre présente
| | |
|---|---|
| 20,0 à 95,0 % en masse | d'eau (bidistillée) (LM), |
| 0,1 à 40,0 % en masse | de préparation de pigments (FM), |
| 0,1 à 10,0 % en masse | de triéthanolamine (PH), |
| 0,01 à 2,0 % en masse | de pentaérythritol (TV3), |
| 0,5 à 10,0 % en masse | de 1,6-hexanediol (TV2), |
| 0,2 à 30,0 % en masse | de diéthylèneglycol (TV1), |
| 0 à 20,0 % en masse | de dispersion polymère (BM), |
| 0,01 à 0,5 % en masse | de conservateur (KM), |
| 0 à 2,0 % en masse | de tensioactif (T), et |
| 0 à 30,0 % en masse | de retardateur de séchage supplémentaire (ZS). |

7. Utilisation d'une encre selon l'une des revendications précédentes pour l'impression, en particulier pour des systèmes d'impression par jet d'encre ou d'autres procédés particuliers d'écriture, d'impression, de peinture ou de marquage par machine.
